(19) Europäisches Patentamt
European Patent Office
Office européen des brevets

(11) **EP 2 487 142 A1**

(12) **EUROPEAN PATENT APPLICATION**
published in accordance with Art. 153(4) EPC

(43) Date of publication:
**15.08.2012 Bulletin 2012/33**

(21) Application number: **10822014.6**

(22) Date of filing: **05.10.2010**

(51) Int Cl.:
**C04B 35/46** [(2006.01)]    **H01C 7/02** [(2006.01)]

(86) International application number:
**PCT/JP2010/067465**

(87) International publication number:
**WO 2011/043344 (14.04.2011 Gazette 2011/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2009 JP 2009232714**

(71) Applicant: **Hitachi Metals, Ltd.**
**Tokyo 105-8614 (JP)**

(72) Inventors:
- **INO Kentaro**
  **Mishima-gun, Osaka 618-0013 (JP)**
- **SHIMADA Takeshi**
  **Mishima-gun, Osaka 618-0013 (JP)**
- **KIDA Toshiki**
  **Tottori-shi, Tottori 689-1121 (JP)**

(74) Representative: **Zimmermann & Partner**
**Josephspitalstr. 15**
**80331 München (DE)**

(54) **SEMICONDUCTOR CERAMIC COMPOSITION, METHOD FOR PRODUCING SAME, PTC ELEMENT AND HEAT GENERATING MODULE**

(57)    There is provided a semiconductor ceramic composition in which a portion of Ba of $BaTiO_3$ is substituted by Bi-Na, which exhibits an excellent jump characteristic while reducing room temperature resistivity and which also reduces room temperature resistivity and exhibits small change with time.

A semiconductor ceramic composition which is represented by a composition formula of $[(Bi_\theta-Na_\delta)_x (Ba_{1-y}R_y)_{1-x}]TiO_3$ (where R is at least one kind of rare earth elements), in which x, y, θ and δ satisfy $0<x\leq0.3$, $0<y\leq0.02$, $0.46<\theta\leq0.62$ and $0.45\leq\delta\leq0.60$ and a molar ratio Bi/Na of Bi to Na in a sintered body is more than 1.02 but 1.20 or less, is provided. Also, a method for producing a semiconductor ceramic composition containing a means for performing weighing such a manner that the molar ratio Bi/Na of Bi to Na is 1.05 to 1.24 so that an amount of Bi in a Bi raw material powder becomes larger than an amount of Na in an Na raw material powder at preparation of a $(BiNa)TiO_3$ calcined powder or a means for adding a Bi raw material powder at preparation of a mixed calcined powder to perform adjustment so that the molar ratio Bi/Na is 1.04 to 1.23, in order that the molar ratio Bi/Na of Bi to Na in a sintered body becomes more than 1.02 but 1.20 or less.

FIG. 1

EP 2 487 142 A1

**Description**

TECHNICAL FIELD

The present invention relates to a semiconductor ceramic composition having a positive resistance temperature characteristic, which is used for a PTC thermistor, a PTC heater, a PTC switch, a temperature detector and the like, as well as a method for producing the same, a PTC element having the semiconductor ceramic composition and a heat generating module using the same.

BACKGROUND ART

Conventionally, as materials showing a PTCR characteristic (Positive Temperature Coefficient of Resistivity), there have been proposed semiconductor ceramic compositions (PTC materials) in which various semiconductive elements are added to $BaTiO_3$. Since these semiconductor ceramic compositions have a jump characteristic that a resistance value sharply increases at a high temperature of the Curie point or higher, they are used for a PTC thermistor, a PTC heater, a PTC switch, a temperature detector and the like. The Curie temperature thereof is around 120°C but, depending on the uses, the Curie temperature needs to be shifted. In the invention, the PTCR characteristic and the jump characteristic are not discriminated and are hereinafter explained with referring to as the jump characteristic.

For example, it has been proposed to shift the Curie temperature by adding $SrTiO_3$ to $BaTiO_3$; however, the Curie temperature is shifted only in a negative direction and is not shifted in a positive direction in this case. Currently, only $PbTiO_3$ is known as an additive element for shifting the Curie temperature in a positive direction. However, since $PbTiO_3$ contains an element Pb that causes environmental pollution, a material which does not use $PbTiO_3$ has been in demand in recent years.

One of the great features of the PTC materials is the sharp increase in resistivity of the PTC materials at the Curie point (jump characteristic), and this is considered to be caused due to an increase in resistance formed at a crystal grain boundary (resistance by schottky barrier). As the characteristics of the PTC materials, a PTC material having a high jump characteristic in resistivity (in other words, a high temperature coefficient of resistivity) and stable resistivity at room temperature have been in demand.

Among the PTC materials containing no Pb such as that disclosed in Patent Reference 1, those having an excellent jump characteristic tend to have high room temperature resistivity (electric resistivity at 25°C), while those having low room temperature resistivity is inferior in the jump characteristic. Therefore, in case where a PTC material having low room temperature resistivity is used for a heater, there is a tendency that a risk of thermal runaway increases due to a low jump characteristic. Accordingly, there is a problem that it is difficult to achieve both of room temperature resistivity stable with a low value and an excellent jump characteristic.

Therefore, in order to solve the aforementioned problem of the conventional $BaTiO_3$-based semiconductor ceramic, the present inventors have previously proposed in Patent Document 2, as a semiconductor ceramic composition which is capable of shifting the Curie temperature to a positive direction without using Pb and also has an excellent jump characteristic with lowering the room temperature resistivity to a large degree, a semiconductor ceramic composition obtained by forming and sintering a mixed calcined powder of a $(BaR)TiO_3$ calcined powder (where R is a semiconductive element and at least one kind of La, Dy, Eu, Gd and Y) and a $(BiNa)TiO_3$ calcined powder, which is represented by a composition formula of $[(BiNa)_x(Ba_{1-y}Ry)_{1-x}]TiO_3$, in which x and y satisfy $0<x\leq0.2$ and $0<y\leq0.02$ and a ratio of Bi to Na satisfies a relationship of Bi/Na = 0.78 through 1, as well as a method for producing the same.

BACKGROUND ART DOCUMENTS

Patent Documents

Patent Document 1: JP-A-56-169301
Patent Document 2: WO2006/118274A1

DISCLOSURE OF THE INVENTION

Problems that the Invention is to Solve

The semiconductor ceramic composition (hereinafter sometimes referred to as PTC material) described in Patent Document 1 shifts the Curie temperate to a positive direction without using Pb and exhibits an excellent jump characteristic while reducing the room temperature resistivity. However, recently, in the uses of a heater and the like, miniaturization has been increasingly advanced and there is a demand to further reduce the room temperature resistivity of the PTC material, in order to obtain a high heater output with using a small-sized element. Moreover, in the PTC material of the above Patent Document 2, it has been revealed that the electric resistivity of the material changes when it is used as a heater material, and there is a problem of so-called change with time.

Thus, an object of the invention is to provide a semiconductor ceramic composition in which a portion of Ba in $BaTiO_3$ is substituted by Bi-Na, wherein the semiconductor ceramic composition exhibits an excellent jump characteristic without using Pb and has small change with time while reducing the room temperature resistivity, as well as a method for producing the same.

Moreover, it is another object to provide a PTC element and a heat generating module using the semiconductor ceramic composition.


Means for Solving the Problems

A first invention of the present invention is a semiconductor ceramic composition which is represented by a composition formula of $[(Bi_\theta\text{-}Na_\delta)_x(Ba_{1-y}R_y)_{1-x}]TiO_3$ (wherein R is at least one kind of rare earth elements), wherein x, y, $\theta$ and $\delta$ satisfy $0<x\leq0.3$, $0<y\leq0.02$, $0.46<\theta\leq0.62$ and $0.45\leq\delta\leq0.60$ and a molar ratio Bi/Na of Bi to Na in a sintered body is more than 1.02 but 1.20 or less.

In this composition, a desirable Curie temperature can be controlled by setting the range of x to be more than 0 but 0.3 or less. Here, when x exceeds 0.3, a different phase is generated, so that the case is not preferred. Moreover, the room temperature resistivity can be reduced by setting the range of y to be more than 0 but 0.02 or less. When y is 0, the room temperature resistivity exceeds $50\,\Omega\cdot$cm and, for example, efficiency as a heater element becomes relatively bad. When y exceeds 0.02, the temperature coefficient of resistivity $\alpha$ becomes less than 7%/°C and safety as a heater element decreases (in other words, a risk of thermal runaway increases), so that the case is not preferred. Incidentally, in this composition, it is also possible to be a semiconductor ceramic composition in which a portion of Ba is further substituted by Ca and/or Sr. Moreover, when $[(Bi_\theta\text{-}Na_\delta)_x(Ba_{1-y}R_y)_{1-x}]TiO_3$ is taken as 100 mol%, about 3 mol% or less of Si oxide or 4 mol% or less of Ca oxide can be incorporated.

It has been found that the semiconductor ceramic composition in which a portion of Ba in $BaTiO_3$ is substituted by Bi-Na has an nature that the room temperature resistivity is low and the temperature coefficient of resistivity $\alpha$ also decreases when the amount of Bi is large, and the room temperature resistivity is high and the temperature coefficient of resistivity $\alpha$ increases when the amount of Na increases. Furthermore, it has been ascertained that the change with time caused by electrification in a case where it is used as a heater or the like is mainly attributable to the fact that Na ion is migrated to a minus pole side when electric field is applied and the resistivity is changed resulting from change in the dielectric constant. A divalent cation enters in a Ba site (A site) of the aforementioned PTC material but, in a case where the Ba site is substituted by Bi and Na, theoretically, an electric balance is maintained though the substitution by trivalent Bi ion and monovalent Na ion in a ratio of 1/1. However, in such a material, Bi is prone to be evaporated as compared with Na at sintering and the remaining Na ion resulting from the evaporation of Bi becomes unstable, so that the Na ion is prone to move. Therefore, as mentioned above, the Na ion migrates to the minus pole side, which causes the change with time. Moreover, when a defect is generated at the Bi site, the defect becomes a path for the Na ion movement. Therefore, the Na ion more easily moves, which causes an increase in the change with time. Accordingly, it is considered that the ratio of Bi to Na has a large influence on the change with time.

Conventionally, the molar ratio Bi/Na of Bi to Na was set to be up to 1.0 but, according to the invention, it is found that the change with time can be remarkably reduced by increasing the ratio to more than 1.02, decreasing a relative Na amount, and reducing the Bi defect. Moreover, when the amount of Bi is increased, even if Bi is evaporated at sintering, the remaining Bi amount can be, as a result, the same level as the Na amount, so that the Bi defect is difficult to generate. As a result, the A site defect decreases and thus the migration of the Na ion can be suppressed when electric field is applied, so that the change with time can be reduced. Furthermore, an effect of lowering the room temperature resistivity can also be obtained by the relative increase of the Bi amount. However, when the Bi/Na ratio exceeds 1.20, the temperature coefficient of resistivity $\alpha$ becomes small (less than 7%/°C), so that the case is not preferred. Moreover, when the Bi/Na ratio is 1.02 or less, it is difficult to reduce the change with time, so that the case is not preferred.

Moreover, the range of $\theta$ is preferably $0.46<\theta\leq0.62$. When $\theta$ is 0.46 or less, the defects at the A site becomes too many and thus it becomes difficult to suppress the migration of Na, so that the case is not preferred. Moreover, when $\theta$ exceeds 0.62, a different phase increases and the resistivity increases, so that the case is not preferred. On the other hand, the range of $\delta$ is preferably $0.45\leq\delta\leq0.60$. When $\delta$ is out of the above range, a different phase increases and the resistivity increases, so that the case is not preferred.

Owing to such a configuration, the change with time can be reduced to 10% or less at the time when an electrification is performed at 13 V for 5000 hours per a thickness of 1 mm in an electrification direction of the semiconductor ceramic composition.

Another invention of the present invention is a semiconductor ceramic composition which is represented by a composition formula of $[(Bi_\theta-Na_\delta)_x Ba_{1-x}][Ti_{1-z} M_z]O_3$ (wherein M is at least one kind of Nb, Ta and Sb), wherein x and z satisfy $0<x\leq0.3$, $0<z\leq0.0050$, $0.46\leq\theta\leq0.62$ and $0.45\leq\delta\leq0.60$ and a molar ratio Bi/Na of Bi to Na in a sintered body is more than 1.02 but 1.20 or less.

This composition is one in which a portion of $TiO_3$ is substituted by an M element but has a commonality in terms that a portion of Ba is substituted by BiNa. Also in this composition, a desirable Curie temperature can be controlled by setting the range of x to be more than 0 but 0.3 or less. Here, when x exceeds 0.3, a different phase is generated, so that the case is not preferred. Moreover, the room temperature resistivity can be reduced by setting the range of z to be more than 0 but 0.0050 or less. When z is 0, the room temperature resistivity becomes relatively so high as 50 $\Omega\cdot cm$ or more and, for example, the use as a heater element becomes impossible. When z exceeds 0.0050, the temperature coefficient of resistivity $\alpha$ becomes less than 7%/°C and safety as a heater element decreases (in other words, a risk of thermal runaway increases), so that the case is not preferred. Incidentally, also in this composition, it is possible to be a semiconductor ceramic composition in which a portion of Ba is further substituted by Ca and/or Sr, or Si oxide or Ca oxide is incorporated.

An invention of the production method of the present invention is a method for producing a semiconductor ceramic composition including: a step of preparing a $(BaR)TiO_3$ calcined powder (wherein R is at least one kind of rare earth elements) and a $(Bi_\theta-Na_\delta)TiO_3$ calcined powder separately, a step of obtaining a formed body composed of a mixed calcined powder obtained by mixing the $(BaR)TiO_3$ calcined powder and the $(Bi_\theta-Na_\delta)TiO_3$ calcined powder, and a step of sintering the formed body in a non-oxidative atmosphere having an oxygen concentration of 1 vol% or less to make a sintered body, wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, in the step of preparing the $(Bi_\theta-Na_\delta)TiO_3$ calcined powder, weighing is performed such a manner that weighed values of $\theta$ and $\delta$ satisfy $0.49<\theta\leq0.66$ and $0.46<\delta\leq0.62$ and the molar ratio Bi/Na of Bi to Na is 1.05 to 1.24 so that an amount of Bi becomes larger than an amount of Na in an BNT raw material powder.

Here, at the preparation of the calcined powder of $(BiNa)TiO_3$, the molar ratio of Bi to Na is controlled by changing the weighed values of Bi and Na, specifically by weighing the amount of Bi contained in a Bi raw material powder such as $Bi_2O_3$ to be larger than an amount of Na contained in an Na raw material powder such as $Na_2CO_3$ in terms of the molar ratio. Accordingly, the deviation in composition can be suppressed with anticipating Bi to be evaporated at the calcination of $(BiNa)TiO_3$, and also the number of weighing times for weighing the raw materials of Bi and Na can be decreased to one time, so that the case is advantageous in view of costs. Consequently, a semiconductor ceramic composition wherein the ratio Bi/Na of Bi to Na in the sintered body is more than 1.02 but 1.20 or less is obtained. Incidentally, the above oxygen concentration does not mean exclusion of the case where the production is carried out in a reductive atmosphere but is suitably until about 0.0001 vol%. When the concentration is extremely lower than the value, excessive oxygen defects may be invited and a decrease in the temperature coefficient of resistivity $\alpha$ is presumable. In consideration from the viewpoint of actual production, 0.001 vol% or more is preferred.

Another production method is a method for producing a semiconductor ceramic composition including: a step of preparing a $(BaM)TiO_3$ calcined powder (wherein M is at least one kind of Nb, Ta and Sb) and a $(Bi_\theta-Na_\delta)TiO_3$ calcined powder separately, a step of obtaining a formed body composed of a mixed calcined powder obtained by mixing the $(BaM)TiO_3$ calcined powder and the $(Bi_\theta-Na_\delta)TiO_3$ calcined powder, and a step of sintering the formed body in a non-oxidative atmosphere having an oxygen concentration of 1 vol% or less to make a sintered body, wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, in the step of preparing the $(Bi_\theta-Na_\delta)TiO_3$ calcined powder, weighing is performed such a manner that weighed values of $\theta$ and $\delta$ satisfy $0.49<\theta\leq0.66$ and $0.46<\delta\leq0.62$ and the molar ratio Bi/Na of Bi to Na is 1.05 to 1.24 so that an amount of in a Bi raw material powder becomes larger than an amount of Na in an Na raw material powder. This production method is different from the aforementioned production method in terms that the $(BaM)TiO_3$ calcined powder is used.

Still another production method of the present invention is a method for producing a semiconductor ceramic composition including: a step of preparing a $(BaR)TiO_3$ calcined powder (wherein R is at least one kind of rare earth elements) and a $(Bi_\theta-Na_\delta)TiO_3$ calcined powder separately, a step of obtaining a formed body composed of a mixed calcined powder obtained by mixing the $(BaR)TiO_3$ calcined powder and the $(Bi_\theta-Na_\delta)TiO_3$ calcined powder, and a step of sintering the formed body in a non-oxidative atmosphere having an oxygen concentration of 1 vol% or less to make a sintered body, wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, a Bi raw material powder is added at the preparation of the mixed calcined powder to perform adjustment so that weighed values of $\theta$ and $\delta$ satisfy $0.48<\theta\leq0.65$ and $0.45\leq\delta\leq0.62$ and a molar ratio Bi/Na of Bi to Na is 1.04 to 1.23.

In a separate calcination method, the Bi raw material is prone to be sublimed at the step of baking the $(Bi_\theta-Na_\delta)TiO_3$ powder and the step of baking the mixed calcined powder of the $(BaR)TiO_3$ calcined powder and the $(Bi_\theta-Na_\delta)TiO_3$

calcined powder. Here, the deviation in composition formed when the $(Bi_\theta\text{-}Na_\delta)TiO_3$ calcined powder is baked can be corrected by adding a Bi raw material powder such as $Bi_2O_3$ in excess at the preparation of the mixed calcined powder obtained by mixing the $(BaR)TiO_3$ calcined powder and the $(Bi_\theta\text{-}Na_\delta)TiO_3$ calcined powder and thus the molar ratio of Bi to Na can be more precisely controlled. The addition of the Bi raw material may be performed to the $(BaR)TiO_3$ calcined powder or the $(Bi_\theta\text{-}Na_\delta)TiO_3$ calcined powder or to the mixed calcined powder of the both. For the control of the amount to be added, by taking out a portion of the raw material powder and performing ICP analysis to calculate $\theta$ and $\delta$ of Bi and Na in the calcined powder and adding the Bi raw material powder such as $Bi_2O_3$ in excess so that the weighed values of $\theta$ and $\delta$ satisfy $0.48 < \theta \le 0.65$ and $0.45 \le \delta \le 0.62$ and the molar ratio Bi/Na of Bi to Na becomes 1.04 to 1.23, a semiconductor ceramic composition wherein Bi/Na in the sintered body is more than 1.02 but 1.20 or less is obtained.

Still another invention of the production method is a method for producing a semiconductor ceramic composition including:

a step of preparing a $(BaM)TiO_3$ calcined powder (wherein M is at least one kind of Nb, Ta and Sb) and a $(Bi_\theta\text{-}Na_\delta)TiO_3$ calcined powder separately,

a step of obtaining a formed body composed of a mixed calcined powder obtained by mixing the $(BaM)TiO_3$ calcined powder and the $(Bi_\theta\text{-}Na_\delta)TiO_3$ calcined powder, and

a step of sintering the formed body in a non-oxidative atmosphere having an oxygen concentration of 1 vol% or less to form a sintered body,

wherein, in order that $\theta$ and $\delta$ in the sintered body satisfy $0.46 < \theta \le 0.62$ and $0.45 \le \delta \le 0.60$ and a molar ratio Bi/Na of Bi to Na becomes more than 1.02 but 1.20 or less, a Bi raw material powder is added at the preparation of the mixed calcined powder to perform adjustment so that weighed values of $\theta$ and $\delta$ satisfy $0.48 < \theta \le 0.65$ and $0.45 \le \delta \le 0.62$ and the molar ratio Bi/Na of Bi to Na is 1.04 to 1.23. This production method is different from the aforementioned production method in terms that the $(BaM)TiO_3$ calcined powder is used.

Moreover, the present invention provides a PTC element containing the semiconductor ceramic composition and provided thereon an ohmic electrode for passing an electric current though the semiconductor ceramic composition. Furthermore, it may be converted into a heat generating module including the aforementioned PTC element and a power supplying electrode provided on the PTC element.

Advantage of the Invention

According to the invention, there can be provided a semiconductor ceramic composition which has excellent jump characteristic without using Pb, has stable room temperature resistivity at low temperature and has small change with time, as well as a method for producing the same.

Moreover, according to another invention, there can be provided a PTC element using the semiconductor ceramic composition and a heat generating module having high safety and durability.

BRIEF DESCRIPTION OF THE DRAWINGS

FIG. 1 is a schematic view showing a heating apparatus (heat generating module) using a PTC element of the invention.

FIG. 2 is an oblique perspective view of another heat generating module of the invention, a part of which is cut and removed.

BEST MODE FOR CARRYING OUT THE INVENTION

The following will explain one example of the semiconductor ceramic composition according to the invention and the production method for obtaining the semiconductor ceramic composition.

First, in a production method of the invention, at the production of the semiconductor ceramic composition having a composition formula $[(Bi_\theta\text{-}Na_\delta)_x(Ba_{1-y}R_y)_{1-x}]TiO_3$, a calcined powder composed of a $(BaR)TiO_3$ calcined powder (hereinafter referred to as BT calcined powder) and a calcined powder composed of a $(Bi_\theta\text{-}Na_\delta)TiO_3$ calcined powder (hereinafter referred to as BNT calcined powder) are prepared separately. Thereafter, a formed body is produced using a mixed calcined powder obtained by appropriately mixing the BT calcined powder and the BNT calcined powder. Thus, there is adopted a separate calcination method where the BT calcined powder and the BNT calcined powder are separately prepared and the mixed calcined powder obtained by mixing them is formed and sintered.

Moreover, at the production of the semiconductor ceramic composition having a composition formula $[(Bi_\theta-Na_\delta)_xBa_{1-x}][Ti_{1-z}M_z]O_3$, a $Ba(TiM)O_3$ calcined powder (in the invention, also referred to as BT calcined powder) and a BNT calcined powder composed of a $(Bi_\theta-Na_\delta)TiO_3$ calcined powder are prepared separately. Thereafter, it is preferred to adopt the separate calcination method as above.

Both of the aforementioned two kinds of compositions are semiconductor ceramic compositions in which a portion of Ba in $BaTiO_3$ is substituted by Bi-Na and the process of preparing the BNT calcined powder is common. The BT calcined powder and the BNT calcined powder are each obtained by calcining respective raw material powders at an appropriate temperature according to each of them. For example, as the raw material powder of the BNT calcined powder, usually $TiO_2$, $Bi_2O_3$ and $Na_2CO_3$ are used. $Bi_2O_3$ has the lowest melting point among these raw material powders and hence evaporation by calcination is more likely to occur. Therefore, it is calcined at such a relatively low temperature as 700 to 950°C so that Bi is not evaporated as far as possible and hyperreaction of Na does not occur. After the BNT calcined powder is once made, the melting point of the BNT powder itself is stabilized at a high value and hence can be baked at a higher temperature even when mixed with the BT calcined powder. Thus, an advantage of the separate calcination method is that the BNT calcined powder having a small deviation in composition of Bi-Na from the weighed values can be made with suppressing the evaporation of Bi and the hyperreaction of Na.

Accordingly, by using the separate calcination method, the molar ratio Bi/Na of Bi to Na can be controlled with good accuracy while the evaporation of Bi in the BNT calcined powder is suppressed and the deviation in composition of Bi-Na is prevented, so that the method is suitable for the invention.

In the invention, using the aforementioned separate calcination method, fluctuation of the room temperature resistivity and temperature coefficient of resistivity can be reduced and further the molar ratio Bi/Na can be controlled with good accuracy by further adopting two methods shown below.

(1) A method of production so that a portion of $BaCO_3$ and $TiO_2$ remain in the BT calcined powder at the preparation of the BT calcined powder in the separate calcination method (hereinafter referred to as "remaining method").

(2) A method of adding $BaCO_3$ and/or $TiO_2$ to the BT calcined powder or the BNT calcined powder or a mixed calcined powder thereof (hereinafter referred to as "adding method"). The following will explain them in sequence.

(1) Remaining method

In the separate calcination method, at the preparation of the BT calcined powder, the mixed raw material powder is made by mixing $BaCO_3$, $TiO_2$ and a raw material powder of a semiconductive element such as $La_2O_3$ and $Nb_2O_5$, followed by calcination. A calcination temperature has heretofore been set within the range of 1000°C to 1300°C for the purpose of forming a perfect single phase. On the other hand, the remaining method is performed at a calcination temperature of 1000°C or lower that is lower than before and a portion of $BaCO_3$ and $TiO_2$ is allowed to remain in the calcined powder without perfectly forming $(BaR)TiO_3$ or $Ba(TiM)O_3$. This point is a characteristic of the remaining method. In the remaining method, when the calcination temperature exceeds 1000°C, $(BaR)TiO_3$ or $Ba(TiM)O_3$ is exceedingly formed and $BaCO_3$ and $TiO_2$ cannot be allowed to remain, so that the case is not preferred.

For changing the remaining amount of $BaCO_3$ and $TiO_2$ in the BT calcined powder, by lowering the calcination temperature, shortening the calcination time or changing the blend composition of the BT calcined powder in the step of preparing the BT calcined powder, the remaining amount of $BaCO_3$ and $TiO_2$ in the BT calcined powder can be changed and thereby the room temperature resistivity and the temperature coefficient of resistivity can be controlled. Specifically, when the calcination temperature is changed within the range of 1000°C or lower, the calcination time is set within 0.5 hour to 10 hours, preferably 2 to 6 hours, or $BaCO_3$ and $TiO_2$ are weighed in larger amounts in the blend composition of the BT calcined powder, the remaining amount of $BaCO_3$ and $TiO_2$ increases and the temperature coefficient of resistivity can be heightened.

With regard to the remaining amount of $BaCO_3$ and $TiO_2$ in the BT calcined powder, $BaCO_3$ is preferably 30 mol% or less and $TiO_2$ is preferably 30 mol% or less when the total of $(BaR)TiO_3$ or $Ba(TiM)O_3$, and $BaCO_3$ and $TiO_2$ is taken as 100 mol%.

The reason why the remaining amount of $BaCO_3$ is set at 30 mol% or less is that a different phase other than $BaCO_3$ is generated to increase the room temperature resistivity when the amount exceeds 30 mol%. Moreover, $CO_2$ gas is generated and cracks are formed in the sintered body in the sintering step, so that the case is not preferred. The reason why the remaining amount of $TiO_2$ is set at 30 mol% or less is that a different phase other than $BaCO_3$ is generated to increase the room temperature resistivity when the amount exceeds 30 mol%.

An upper limit of the remaining amount of $BaCO_3$ and $TiO_2$ is 60 mol% which is the sum of 30 mol% for $BaCO_3$ and 30 mol% for $TiO_2$ and a lower limit is an amount more than 0. In a case where $BaCO_3$ exceeds 20 mol%, when $TiO_2$ becomes less than 10 mol%, a different phase other than $BaCO_3$ is generated to increase the room temperature resistivity, so that the case is not preferred. On the other hand, the case where $TiO_2$ exceeds 20 mol% and $BaCO_3$ becomes less than 10 mol% is not preferred similarly. Accordingly, in a case where one of $BaCO_3$ and $TiO_2$ exceeds

20 mol%, it is preferred to adjust the calcination temperature, temperature, blend composition, and the like so that the other becomes 10 mol% or more.

Next, in the step of preparing the BNT calcined powder composed of the $(Bi_\theta\text{-}Na_\delta)TiO_3$ calcined powder, which is to be mixed with the aforementioned BT calcined powder in which a portion of $BaCO_3$ and $TiO_2$ remain, first, $Na_2CO_3$, $Bi_2O_3$ and $TiO_2$ as raw material powders are mixed to make a mixed raw material powder. On this occasion, according to one method of the invention, with anticipating that $\theta$ and $\delta$ in the sintered body satisfy $0.46<\theta\leq0.62$ and $0.45\leq\delta\leq0.60$ and the molar ratio Bi/Na of Bi to Na in the sintered body becomes more than 1.02 but 1.20 or less, at the mixing of the raw materials, weighing is performed such a manner that weighed values of $\theta$ and $\delta$ satisfy $0.49<\theta\leq0.66$ and $0.46<\delta\leq0.62$ and the molar ratio Bi/Na of Bi to Na becomes 1.05 to 1.24.

Then, the BNT raw material powder mixed in the above is calcined. The calcination temperature is preferably in the range of 700°C to 950°C. The calcination time is preferably 0.5 hour to 10 hours, further preferably 2 hours to 6 hours. When the calcination temperature is lower than 700°C or the calcination time is less than 0.5 hour, unreacted $Na_2CO_3$ and NaO formed through decomposition react with moisture in the atmosphere or, in the case of wet mixing, a solvent and the deviation in composition and the fluctuation in properties may occur, so that the cases are not preferred. Moreover, when the calcination temperature exceeds 950°C or the calcination time exceeds 10 hours, the evaporation of Bi is promoted to cause the deviation in composition and hence the formation of the different phase is accelerated, so that the cases are not preferred.

In the aforementioned steps of preparing individual calcined powders, pulverization may be performed depending on the particle size of the raw material powders at the mixing of the raw material powders. Moreover, mixing and pulverization may be either wet mixing/pulverization with using pure water or ethanol or dry mixing/pulverization but, when dry mixing/pulverization is performed, the deviation in composition can be further prevented, so that the case is preferred. In the above, $BaCO_3$, $Na_2CO_3$, $TiO_2$ and the like are mentioned as examples of the raw material powders but the other a compounds, Na compounds and the like may be employed.

As mentioned above, the BT calcined powder in which a portion of $BaCO_3$ and $TiO_2$ remain and the BNT calcined powder in which the molar ratio Bi/Na of Bi to Na is controlled to 1.05 to 1.24 are separately prepared and, after individual calcined powders are blended in prescribed amounts, they are mixed. Mixing may be either wet mixing with using pure water or ethanol or dry mixing but, when dry mixing is performed, the deviation in composition can be further prevented, so that the case is preferred. Moreover, depending on the particle sizes of the calcined powders, pulverization may be performed after mixing or mixing and pulverization may be performed simultaneously. The average particle size of the mixed calcined powder after mixing and pulverization is preferably 0.5 $\mu$m to 2.5 $\mu$m.

On this occasion, according to another method of the invention, $Bi_2O_3$ is added in excess at the blending and mixing and the amount to be added is controlled so that the molar ratio Bi/Na of Bi to Na in the sintered body becomes more than 1.02 but 1.20 or less. Actually, it is suitable to add $Bi_2O_3$ so that the weighed values of $\theta$ and $\delta$ satisfy $0.48<\theta\leq0.65$ and $0.45\leq\delta\leq0.62$ and the molar ratio Bi/Na of Bi to Na becomes about 1.03 to 1.23 in the state of the mixed calcined powder. This method can directly correct the deviation in composition generated at the BNT calcination by adding $Bi_2O_3$ to the mixed calcined powder as compared with the aforementioned method of controlling the molar ratio Bi/Na of Bi to Na by the weighed values at the production of the $(Bi_\theta\text{-}Na_\delta)TiO_3$ powder, and hence the molar ratio Bi/Na of Bi to Na can be controlled with higher accuracy.

The mixed calcined powder obtained by the step of mixing the BT calcined powder and the BNT calcined powder is formed by a desired forming method. Before forming, if necessary, the pulverized powder may be granulated by a granulating apparatus. The density of the formed body after forming is preferably 2.5 to 3.5 g/cm$^3$.

Sintering is performed in a non-oxidative atmosphere having such a low oxygen concentration as 1 vol% or less. Particularly, sintering is preferably performed in an atmosphere of an inert gas such as nitrogen or argon having an oxygen concentration of 0.001 vol% or more but 1 vol% or less. The sintering temperature is preferably 1250°C to 1380°C and, in the sintering step, temperature elevation, maintenance and cooling are preferably performed in the above atmosphere. The sintering maintenance time is preferably 1 hour to 10 hours, more preferably 2 hours to 6 hours. As both conditions deviate from preferable conditions, the room temperature resistivity increases or the jump characteristic decreases, so that the cases are not preferred.

As above, by mixing the BT calcined powder in which a portion of $BaCO_3$ and $TiO_2$ is allowed to remain by the remaining method and the separately prepared BNT calcined powder and sintering the formed body composed of the mixed calcined powder, there can be obtained a semiconductor ceramic composition wherein $\theta$ and $\delta$ of Bi and Na in the sintered body satisfy $0.46<\theta\leq0.62$ and $0.45\leq\delta\leq0.60$ and the molar ratio Bi/Na of Bi to Na is more than 1.02 but 1.20 or less.

Incidentally, the production method of the invention using the remaining method includes, as a first method, a case where, when the BNT calcined powder is prepared, the molar ratio Bi/Na of Bi to Na in the sintered body is controlled for the BNT powder to the prescribed value by weighing and, as a second method, a case where, when the mixed calcined powder obtained by mixing the BT calcined powder and the BNT calcined powder is prepared, the molar ratio Bi/Na of Bi to Na in the sintered body is controlled to the prescribed value by adding a Bi raw material powder to the BT calcined powder, the BNT calcined powder or the mixed calcined powder thereof. In the invention, the first method or the second method may be used alone. However, the combination use of both methods is not excluded.

(2) Adding method

Next, an adding method will be explained. In the adding method, at the preparation of the BT calcined powder, the mixed raw material powder is made by mixing $BaCO_3$, $TiO_2$ and a raw material powder of a semiconductive element such as $La_2O_3$ and $Nb_2O_5$, followed by calcination. The calcination temperature here is preferably 1000°C or higher. When the calcination temperature is lower than 1000°C, a perfect single phase of $(BaR)TiO_3$ or $Ba(TiM)O_3$ is not formed, so that the case is not preferred. This is because, when the perfect single phase is not formed, unreacted $BaCO_3$ and $TiO_2$ remain and, since the addition of $BaCO_3$ powder and/or $TiO_2$ powder is postulated, prediction of the amount thereof to be added becomes difficult, but a slight amount of remaining $BaCO_3$ and $TiO_2$ is allowable. Preferred calcination temperature is 1000°C to 1300°C. The calcination time is preferably 0.5 hour to 10 hours, more preferably at 2 to 6 hours.

In the adding method, the step of preparing the BNT calcined powder, the step of mixing (pulverizing) the BT calcined powder and the BNT calcined powder, and the like are the same as those in the aforementioned remaining method.

It is a characteristic feature of the adding method to add $BaCO_3$ and/or $TiO_2$ to the BT calcined powder or BNT calcined powder or the mixed calcined powder thereof prepared as above.

With regard to the amount of $BaCO_3$ and/or $TiO_2$ to be added, $BaCO_3$ is preferably 30 mol% or less and $TiO_2$ is preferably 30 mol% or less when the total of $(BaR)TiO_3$ or $Ba(TiM)O_3$ and $BaCO_3$ and/or $TiO_2$ is taken as 100 mol%. By changing the amount to be added, the existing ratio of the P-type semiconductor component can be controlled. Particularly, according to the adding method, since the adding amount can be accurately regulated, the room temperature resistivity can be controlled with extremely high accuracy.

The reason why the adding amount of $BaCO_3$ is set at 30 mol% or less is that a different phase other than $BaCO_3$ is generated to increase the room temperature resistivity when the amount exceeds 30 mol%. Moreover, $CO_2$ gas is generated and cracks are formed in the sintered body in the sintering step, so that the case is not preferred. The reason why the adding amount of $TiO_2$ is set at 30 mol% or less is that a different phase other than $BaCO_3$ is generated to increase the room temperature resistivity when the amount exceeds 30 mol%.

When both of $BaCO_3$ and $TiO_2$ are contained, an upper limit of the remaining amount of $BaCO_3$ and $TiO_2$ is 60 mol% which is the sum of 30 mol% for $BaCO_3$ and 30 mol% for $TiO_2$ and a lower limit is an amount more than 0. In a case where $BaCO_3$ exceeds 20 mol%, when $TiO_2$ becomes less than 10 mol%, a different phase other than $BaCO_3$ is generated to increase the room temperature resistivity, so that the case is not preferred. On the other hand, a case where $TiO_2$ exceeds 20 mol% and $BaCO_3$ becomes less than 10 mol% is not preferred similarly. Accordingly, in a case where one of $BaCO_3$ and $TiO_2$ exceeds 20 mol%, it is preferred to adjust the other to be 10 mol% or more.

Incidentally, although a BT calcined powder where a perfect single phase of $(BaR)TiO_3$ or $Ba(TiM)O_3$ is formed is preferred as the BT calcined powder as mentioned above, it is also possible to change the amount to be added by substituting a portion of the BT calcined powder in which the perfect single phase is formed by the BT calcined powder in which $BaCO_3$ and $TiO_2$ remain and which is obtained by the aforementioned remaining method and further adding $BaCO_3$ and/or $TiO_2$ in prescribed amounts.

In the adding method, as mentioned above, after the BT calcined powder and the BNT calcined powder are prepared separately, $BaCO_3$ and/or $TiO_2$ are added to the BT calcined powder or BNT calcined powder or the mixed calcined powder thereof. Then, after the individual calcined powders are blended in prescribed amounts, they are mixed. Mixing may be either wet mixing with using pure water or ethanol or dry mixing but, when dry mixing is performed, the deviation in composition can be prevented, so that the case is preferred. Moreover, depending on the particle sizes of the calcined powders, pulverization may be performed after mixing or mixing and pulverization may be performed simultaneously. The average particle size of the mixed calcined powder after mixing and pulverization is preferably 0.5 $\mu$m to 2.5 $\mu$m.

On this occasion, according to one method of the invention, by adding $Bi_2O_3$ in excess at the blending and mixing, the individual composition ratios are controlled so that $\theta$ and $\delta$ in the above $(Bi_\theta-Na_\delta)TiO_3$ sintered body satisfy $0.46<\theta\leq0.62$ and $0.45\leq\delta\leq0.60$ and the molar ratio Bi/Na of Bi to Na in the sintered body becomes more than 1.02 but 1.20 or less. It is suitable that the weighed values of $\theta$ and $\delta$ in a mixed calcined powder state satisfy $0.48<\theta\leq0.65$ and $0.455\leq\delta\leq0.62$ and the molar ratio Bi/Na of Bi to Na is 1.04 to 1.23. This method can directly correct the deviation in composition generated at the BNT calcination by adding $Bi_2O_3$ to the mixed calcined powder as compared with the aforementioned method of controlling the molar ratio Bi/Na of Bi to Na by the weighed values at the production of the aforementioned $(BiNa)TiO_3$ powder, and hence the molar ratio Bi/Na of Bi to Na can be controlled with higher accuracy.

Since the steps of forming, sintering and the like, following the step of mixing the BT calcined powder and the BNT calcined powder, are the same as those in the aforementioned remaining method, explanation thereof is omitted. As above, by mixing the BT calcined powder in which $BaCO_3$, $TiO_2$ is added according to the adding method and the separately prepared BNT calcined powder and sintering the formed body composed of the mixed calcined powder, there can be obtained a semiconductor ceramic composition wherein θ and δ of Bi and Na in the sintered body satisfy 0.46<θ≤0.62 and 0.45≤δ≤0.60 and the molar ratio Bi/Na of Bi to Na is more than 1.02 but 1.20 or less.

Incidentally, in the above adding method, the second method of the invention is described but there may be employed the first method where, at the preparation of the BNT calcined powder, controlling is achieved by weighing so that the weighed values of θ and δ satisfy 0.48<θ≤0.65 and 0.45≤δ≤0.62 and the molar ratio Bi/Na of Bi to Na becomes about 1.05 to 1.24. Moreover, the first method and the second method may be used in combination.

EXAMPLES

(Example 1)

The following semiconductor ceramic composition was obtained using the remaining method. Raw material powders of $BaCO_3$, $TiO_2$ and $La_2O_3$ were prepared and then blended so as to be $(Ba_{0.998}La_{0.002})TiO_3$, followed by mixing in pure water. The resulting mixed raw material powder was calcined in the air at 900°C for 4 hours to prepare a BT calcined powder.

Raw material powders of $Na_2CO_3$, $Bi_2O_3$ and $TiO_2$ were prepared and then weighed and blended so as to be $Bi_{0.57}Na_{0.50}TiO_3$ (molar ratio Bi/Na of Bi to Na was 1.14), followed by mixing in ethanol. The resulting mixed raw material powder was calcined in the air at 800°C for 2 hours to prepare a BNT calcined powder.

The prepared BT calcined powder and BNT calcined powder were blended so that the molar ratio became 73/7. Mixing and pulverization were performed by a pot mil using pure water as a medium until the central particle diameter of the mixed calcined powder became 1.0 μm to 2.0 μm, followed by drying. PVA was added in an amount of 10% by weight to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body was kept in a nitrogen atmosphere having an oxygen concentration of 0.01 vol% (100 ppm) at 1360°C for 4 hours and then gradually cooled to obtain a sintered body having a size of 40 mm×25 mm×4 mm.

The resulting sintered body was processed into a plate having a size of 10 mm×10 mm×1 to make a test piece. Ohmic electrodes (Model No.: SR5051, manufactured by Namics Corporation) were appied on the positive and negative sides and cover electrodes (Model No.: SR5080, manufactured by Namics Corporation) were further applied thereon. After drying at 180°C, baking was performed in the air at 600°C for 10 minutes to form electrodes.

Evaluation methods are as follows.
Calculation of the molar ratio Bi/Na in the sintered body of the semiconductor ceramic composition was performed by ICP analysis (Model No.: ICPS8100, manufactured by Shimadzu Corporation).

The temperature coefficient of resistivity α was calculated with measuring resistance-temperature properties while temperature is elevated until 260°C in a constant-temperature chamber.

Incidentally, the temperature coefficient of resistivity α is defined by the following equation.

$$\alpha = (\ln R_1 - \ln R_c) \times 100 / (T_1 - T_c)$$

wherein $R_1$ is maximum resistivity, $T_1$ is a temperature at which $R_1$ is shown, $T_c$ is the Curie temperature, and $R_c$ is resistivity at $T_c$. Here, $T_c$ was determined to be a temperature at which resistivity became twice the room temperature resistivity.

The room temperature resistivity $R_{25}$ was measured by 4 terminal method at 25°C.
The electrification test was performed by installing the test piece on a heater fitted with an aluminum fin and applying a voltage of 13 V for 5000 hours while cooling at a wind velocity of 4 m/s. The fin temperature on this occasion was 70°C. The room temperature resistivity at 25°C after the electrification test was measured and a difference between the room temperature resistivity before the electrification test and the room temperature resistivity after the electrification test for 5000 hours was divided by the room temperature resistivity before the electrification test to determine a rate of change in resistivity (%), thereby change with time being investigated.
Accordingly, the rate of change in resistivity is defined by the following equation.

$$\{(\text{room temperature resistivity after standing for 5000 hours}) - (\text{initial room temperature resistivity})\}/(\text{initial room temperature resistivity}) \times 100 \ (\%)$$

The results obtained are shown in Table 1. The values of θ and δ in this Example were 0.55 and 0.49, respectively. With regard to the molar ratio Bi/Na of Bi to Na, the weighed value was 1.14 but, as a result of ICP analysis, the value of the molar ratio Bi/Na of Bi to Na in the sintered body was 1.12. The difference is mainly attributable to the evaporation of Bi at sintering. Moreover, the test piece had properties that the Curie temperature was 163°C, the room temperature resistivity was 38 Ω · cm, the temperature coefficient of resistivity a was 8.2%/°C, and the change with time was 7.6%. Incidentally, in the following Examples and Comparative Examples, target values of the individual properties are set as follows: the room temperature resistivity is 50 Ω · cm or less, the temperature coefficient of resistivity α is 7%/°C or more, and the change with time is 10% or less.

(Example 2)

Example 2 is an example where the amount of La substitution and the molar ratio Bi/Na of Bi to Na in Example 1 were changed. Similarly to Example 1, a semiconductor ceramic composition was obtained as follows using the first method of the invention in the process of the remaining method. Raw material powders of $BaCO_3$, $TiO_2$ and $La_2O_3$ were prepared and then blended so as to be $(Ba_{0.994}La_{0.006})TiO_3$, followed by mixing in pure water. The resulting mixed raw material powder was calcined in the air at 900°C for 4 hours to prepare a BT calcined powder.

Raw material powders of $Na_2CO_3$, $Bi_2O_3$ and $TiO_2$ were prepared and then blended so as to be $Bi_{0.53}Na_{0.50}TiO_3$ (molar ratio Bi/Na of Bi to Na was 1.06), followed by mixing in ethanol. The resulting mixed raw material powder was calcined in the air at 800°C for 2 hours to prepare a BNT calcined powder.

The prepared BT calcined powder and BNT calcined powder were blended so that the molar ratio became 73/7. Mixing and pulverization were performed by a pot mil using pure water as a medium until the central particle diameter of the mixed calcined powder became 1.0 μm to 2.0 μm, followed by drying. PVA was added in an amount of 10% by weight to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body was kept in a nitrogen atmosphere having an oxygen concentration of 0.01 vol% (100 ppm) at 1360°C for 4 hours and then gradually cooled to obtain a similar sintered body.

The resulting sintered body was subjected to processing, electrode formation and property evaluation. The results obtained are shown in Table 1. The values of θ and δ in the sintered body were 0.51 and 0.49, respectively, the value of the molar ratio Bi/Na of Bi to Na was 1.04 and the evaporation of Bi was similarly observed. However, the room temperature resistivity was 48 Ω · cm, the temperature coefficient of resistivity α was 8.9%/°C, and the change with time was 9.8%, which satisfied the target properties.

(Examples 3 to 5)

In Examples 3 to 5, each sintered body was obtained using the same composition and production method as in Example 2. However, they are examples where the molar ratio Bi/Na of Bi to Na was changed. The evaluation methods were also the same as in Example 1. The results obtained are shown in Table 1. The results of Examples 3 to 5 satisfied the target property values in all of the room temperature resistivity $R_{25}$, the temperature coefficient of resistivity α and the change with time. Incidentally, it is revealed that there is a tendency that the temperature coefficient of resistivity α is increased but the change with time cannot be sufficiently decreased when the molar ratio Bi/Na of Bi to Na approaches 1.02 and there is another tendency that the change with time is decreased but the temperature coefficient of resistivity α cannot be sufficiently increased when the ratio approaches 1.20.

(Comparative Examples 1 to 3)

In Comparative Examples 1 to 3, each sintered body was obtained using the same composition and production method as in Example 2. However, they are examples where the weighed value of the molar ratio Bi/Na of Bi to Na was changed to 1.02 in Comparative Example 1, 1.26 in Comparative Example 2 and 1.34 in Comparative Example 3. The other production methods and the evaluation methods were the same as in Example 2. The results obtained are shown in Table 1.

From the results of Examples 1 to 5 and Comparative Examples 1 to 3, there is a trade-off relation between the temperature coefficient of resistivity and the change with time and, when the molar ratio Bi/Na of Bi to Na in the sintered body is 1.02 or less, the change with time cannot be sufficiently decreased and is 10% or more. When the molar ratio Bi/Na of Bi to Na exceeds 1.20, the temperature coefficient of resistivity α is decreased and becomes 7.0%/°C or less. Accordingly, it is revealed that the molar ratio Bi/Na of Bi to Na in the sintered body is suitably set to be more than 1.02 but 1.20 or less.

(Comparative Example 4)

Comparative Example 4 is an example where the R element of (BaR)TiO$_3$ was not introduced, i.e., y=0. The other production methods and the evaluation methods of the semiconductor ceramic composition were the same as in Example 4. The results obtained are shown in Table 1. From Example 4 and Comparative Example 4, it is revealed that the room temperature resistivity cannot be 50 $\Omega \cdot$ cm or less when y is 0. There is an action that the room temperature resistivity is reduced by performing sintering in a non-oxidative atmosphere having a low oxygen concentration, but the action is suppressed when the R element is not introduced. The following examples investigate the influences on the temperature coefficient of resistivity $\alpha$ and the change with time.

(Examples 6 to 11)

In Examples 6 to 11, each sintered body was obtained using the same composition and production method as in Example 4. However, they are examples where the oxygen concentration at sintering was changed. Namely, the oxygen concentration at sintering was changed to 0.98 vol% in Example 6, 0.3 vol% in Example 7, 0.03 vol% in Example 8, 0.005 vol% in Example 9, 0.001 vol% in Example 10, and 0.0008 vol% in Example 11. The other production methods and the evaluation methods of the semiconductor ceramic composition were the same as in Example 2. The results obtained are shown in Table 1. It is revealed that there is a tendency that the temperature coefficient of resistivity $\alpha$ is increased but the change with time cannot be sufficiently decreased when the oxygen concentration is relatively high and there is another tendency that the change with time is decreased but the temperature coefficient of resistivity $\alpha$ cannot be sufficiently increased when the oxygen concentration is low. As a result, even when the oxygen concentration was changed in the range of 1 vol% to 0.0008 vol%, the target property values were satisfied in all of the room temperature resistivity R$_{25}$, the temperature coefficient of resistivity $\alpha$ and the change with time.

(Comparative Examples 5 and 6)

Comparative Example 5 is an example where the oxygen concentration at sintering was 1.05 vol% and Comparative Example 6 is an example where the oxygen concentration at sintering was 20.9 vol% (sintered in the air). The other production methods and the evaluation methods of the semiconductor ceramic composition were the same as in Example 4. The results obtained are shown in Table 1. From Examples 1 to 11 and Comparative Example 5, it is revealed that the target property values cannot be satisfied in all of the room temperature resistivity R$_{25}$, the temperature coefficient of resistivity $\alpha$ and the change with time when the oxygen concentration at sintering exceeds 1 vol%. Moreover, when sintering is performed in the air, the room temperature resistivity reaches in the order of several hundreds $\Omega \cdot$ cm and the target properties cannot be obtained even when the molar ratio Bi/Na of Bi to Na is regulated.

(Examples 12 to 17)

In Examples 12 to 17, each sintered body was obtained using the same composition and production method as in Example 2. However, they are examples where the molar ratio of the BT calcined powder to the BNT calcined powder was changed or the amount of La was changed. The other production methods and the evaluation methods of the semiconductor ceramic composition were the same as in Example 2. The results obtained are shown in Table 1. Also, in these Examples, the target property values were satisfied in all of the room temperature resistivity R$_{25}$, the temperature coefficient of resistivity $\alpha$ and the change with time.
Table 1

| | x | y | Weighed value | | Analytical value | | Molar ratio of BiNa (Bi/Na) Weighed value | Molar ratio of BiNa (Bi/Na) Analytical value | Curie temperature (°C) | Room temperature resistivity $R_{25}$ ($\Omega \cdot cm$) | Temperature coefficient of resistivity $\alpha$ (%/°C) | Change with time (%) |
|---|---|---|---|---|---|---|---|---|---|---|---|---|
| | | | $\theta$ | $\delta$ | $\theta$ | $\delta$ | | | | | | |
| Example 1 | 0.088 | 0.002 | 0.57 | 0.50 | 0.55 | 0.49 | 1.14 | 1.12 | 163 | 38 | 8.2 | 7.6 |
| Example 2 | 0.088 | 0.006 | 0.53 | 0.50 | 0.51 | 0.49 | 1.06 | 1.04 | 164 | 48 | 8.9 | 9.8 |
| Example 3 | 0.088 | 0.006 | 0.55 | 0.50 | 0.52 | 0.49 | 1.10 | 1.06 | 160 | 37 | 8.6 | 8.8 |
| Example 4 | 0.088 | 0.006 | 0.57 | 0.50 | 0.55 | 0.49 | 1.14 | 1.12 | 162 | 28 | 7.5 | 6.1 |
| Example 5 | 0.088 | 0.006 | 0.61 | 0.50 | 0.58 | 0.49 | 1.22 | 1.18 | 163 | 22 | 7.3 | 4.8 |
| Comparative Example 1· | 0.088 | 0.006 | 0.51 | 0.50 | 0.49 | 0.49 | 1.02 | 1.00 | 155 | 51 | 9.4 | 27 |
| Comparative Example 2· | 0.088 | 0.006 | 0.63 | 0.50 | 0.6 | 0.49 | 1.26 | 1.22 | 167 | 15 | 6.5 | 2.5 |
| Comparative Example 3· | 0.088 | 0.006 | 0.67 | 0.50 | 0.64 | 0.49 | 1.34 | 1.31 | 181 | 11 | 3.1 | 1.2 |
| Comparative Example 4· | 0.088 | 0 | 0.57 | 0.50 | 0.55 | 0.49 | 1.14 | 1.12 | 160 | 53 | 8.6 | 10 |
| Example 6 | 0.088 | 0.006 | 0.57 | 0.50 | 0.55 | 0.49 | 1.14 | 1.12 | 159 | 49 | 10.1 | 9.1 |
| Example 7 | 0.088 | 0.006 | 0.57 | 0.50 | 0.55 | 0.49 | 1.14 | 1.12 | 159 | 45 | 9.5 | 8.7 |
| Example 8 | 0.088 | 0.006 | 0.57 | 0.50 | 0.55 | 0.49 | 1.14 | 1.12 | 161 | 37 | 8.7 | 7.9 |
| Example 9 | 0.088 | 0.006 | 0.57 | 0.50 | 0.55 | 0.49 | 1.14 | 1.12 | 162 | 30 | 8.1 | 5.8 |
| Example 10 | 0.088 | 0.006 | 0.57 | 0.50 | 0.55 | 0.49 | 1.14 | 1.12 | 164 | 19 | 7.0 | 3.8 |
| Example 11 | 0.088 | 0.006 | 0.57 | 0.50 | 0.55 | 0.49 | 1.14 | 1.12 | 164 | 15 | 7.0 | 2.1 |
| Comparative Example 5· | 0.088 | 0.006 | 0.57 | 0.50 | 0.55 | 0.49 | 1.14 | 1.12 | 154 | 67 | 11.5 | 254 |
| Comparative Example 6· | 0.088 | 0.006 | 0.57 | 0.50 | 0.55 | 0.49 | 1.14 | 1.12 | 152 | 317 | 11.8 | 524 |
| Example 12 | 0.28 | 0.006 | 0.57 | 0.50 | 0.55 | 0.49 | 1.14 | 1.12 | 189 | 44 | 8.8 | 9.5 |

| | x | y | Weighed value | | Analytical value | | Molar ratio of BiNa (Bi/Na) Weighed value | Molar ratio of BiNa (Bi/Na) Analytical value | Curie temperature (°C) | Room temperature resistivity $R_{25}$ ($\Omega \cdot$ cm) | Temperature coefficient of resistivity $\alpha$ (%/°C) | Change with time (%) |
|---|---|---|---|---|---|---|---|---|---|---|---|---|
| | | | $\theta$ | $\delta$ | $\theta$ | $\delta$ | | | | | | |
| Example 13 | 0.14 | 0.006 | 0.57 | 0.50 | 0.55 | 0.49 | 1.14 | 1.12 | 180 | 31 | 7.8 | 8.0 |
| Example 14 | 0.02 | 0.006 | 0.57 | 0.50 | 0.55 | 0.49 | 1.14 | 1.12 | 130 | 25 | 7.1 | 5.5 |
| Example 15 | 0.088 | 0.018 | 0.57 | 0.50 | 0.55 | 0.49 | 1.14 | 1.12 | 168 | 21 | 7.1 | 4.9 |
| Example 16 | 0.088 | 0.02 | 0.57 | 0.50 | 0.55 | 0.49 | 1.14 | 1.12 | 170 | 19 | 7.0 | 4.0 |
| Example 17 | 0.088 | 0.002 | 0.57 | 0.50 | 0.55 | 0.49 | 1.14 | 1.12 | 163 | 38 | 8.2 | 7.6 |

(Example 18)

Example 18 is an example using the adding method. The sample was made as follows. Raw material powders of $BaCO_3$, $TiO_2$ and $La_2O_3$ were prepared and then blended so as to be $(Ba_{0.994}La_{0.006})TiO_3$, followed by mixing in pure water. The resulting mixed raw material powder was calcined in the air at 1100°C for 4 hours. To the calcined powder, 30 mol% of $BaCO_3$ and 30 mol% of $TiO_2$ were each added to prepare a BT calcined powder. The other production methods and the evaluation methods of the semiconductor ceramic composition were the same as in Example 1. The results obtained are shown in Table 2.

(Examples 19 to 21)

In Examples 19 to 21, each sintered body was obtained using the same composition and production method as in Example 18. However, they are examples where the molar ratio Bi/Na of Bi to Na was changed. The other production methods and the evaluation methods of the semiconductor ceramic composition were the same as in Example 18. The results obtained are shown in Table 2. The results of Examples 19 to 21 satisfied the target property values in all of the room temperature resistivity $R_{25}$, the temperature coefficient of resistivity $\alpha$ and the change with time. Moreover, a similar tendencies to those in the remaining method were observed on the relation between the temperature coefficient of resistivity $\alpha$ and the change with time.

(Examples 22 to 26)

In Examples 22 to 26, each sintered body was obtained using the same composition and production method as in Example 18. However, they are examples where the molar ratio of the BT calcined powder to the BNT calcined powder was changed or the amount of La was changed. The other production methods and the evaluation methods of the semiconductor ceramic composition were the same as in Example 18. The results obtained are shown in Table 2. Also, in these Examples, the target property values were satisfied in all of the room temperature resistivity $R_{25}$, the temperature coefficient of resistivity $\alpha$ and the change with time.

Table 2

| | x | y | Weighed value | | Analytical value | | Molar ratio of BiNa (Bi/Na) Weighed value | Molar ratio of BiNa (Bi/Na) Analytical value | Curie temperature (°C) | Room temperature resistivity $R_{25}$ ($\Omega \cdot$ cm) | Temperature coefficient of resistivity $\alpha$ (%/°C) | Change with time (%) |
| | | | $\theta$ | $\delta$ | $\theta$ | $\delta$ | | | | | | |
|---|---|---|---|---|---|---|---|---|---|---|---|---|
| Example 18 | 0.088 | 0.006 | 0.53 | 0.50 | 0.51 | 0.49 | 1.06 | 1.04 | 165 | 47 | 8.7 | 9.6 |
| Example 19 | 0.088 | 0.006 | 0.55 | 0.50 | 0.52 | 0.49 | 1.10 | 1.06 | 155 | 35 | 8.4 | 8.5 |
| Example 20 | 0.088 | 0.006 | 0.57 | 0.50 | 0.55 | 0.49 | 1.14 | 1.12 | 162 | 28 | 7.3 | 5.1 |
| Example 21 | 0.088 | 0.006 | 0.61 | 0.50 | 0.59 | 0.49 | 1.22 | 1.18 | 166 | 20 | 7.0 | 3.8 |
| Example 22 | 0.28 | 0.006 | 0.57 | 0.50 | 0.55 | 0.49 | 1.14 | 1.12 | 185 | 42 | 8.6 | 9.3 |
| Example 23 | 0.14 | 0.006 | 0.57 | 0.50 | 0.55 | 0.49 | 1.14 | 1.12 | 178 | 30 | 7.2 | 5.0 |
| Example 24 | 0.02 | 0.006 | 0.57 | 0.50 | 0.55 | 0.49 | 1.14 | 1.12 | 129 | 23 | 7.0 | 4.4 |
| Example 25 | 0.088 | 0.018 | 0.57 | 0.50 | 0.55 | 0.49 | 1.14 | 1.12 | 168 | 19 | 7.0 | 4.0 |
| Example 26 | 0.088 | 0.002 | 0.57 | 0.50 | 0.55 | 0.49 | 1.14 | 1.12 | 164 | 37 | 7.8 | 7.2 |

(Example 27)

Example 27 is an example where a portion of Ti was substituted by Nb. Raw material powders of $BaCO_3$, $TiO_2$ and $Nb_2O_3$ were prepared and then blended so as to be $Ba(Ti_{0.997}Nb_{0.003})O_3$, followed by mixing in pure water. The resulting mixed raw material powder was calcined in the air at 900°C for 4 hours to prepare a BT calcined powder.

Then, raw material powders of $Na_2CO_3$, $Bi_2O_3$ and $TiO_2$ were prepared and then weighed and blended so as to be $Bi_{0.54}Na_{0.51}TiO_3$ (molar ratio Bi/Na of Bi to Na was 1.06), followed by mixing in ethanol. The resulting mixed raw material powder was calcined in the air at 800°C for 2 hours to prepare a BNT calcined powder.

The prepared BT calcined powder and BNT calcined powder were blended so that the molar ratio became 73/7. Mixing and pulverization were performed by a pot mil using pure water as a medium until the central particle diameter of the mixed calcined powder became 1.0 $\mu$m to 2.0 $\mu$m, followed by drying. PVA was added in an amount of 10% by weight to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body was kept in a nitrogen atmosphere having an oxygen concentration of 0.01 vol% at 1360°C for 4 hours and then gradually cooled to obtain a sintered body. The resulting sintered body was subjected to electrode formation in the same manner as in Example 1 to obtain a semiconductor ceramic composition. The evaluation methods were the same as in Example 1. The results obtained are shown in Table 3.

(Examples 28 to 30)

Examples 28 to 30 are examples where a portion of Ti was substituted by Nb and the molar ratio Bi/Na of Bi to Na was changed. The other production methods and the evaluation methods of the semiconductor ceramic composition were the same as in Example 27. The results obtained are shown in Table 3.

(Comparative Examples 7 to 9)

In Comparative Examples 7 to 9, each sintered body was obtained using the same composition and production method as in Example 27. However, they are examples where the molar ratio Bi/Na of Bi to Na was changed and the molar ratio Bi/Na of Bi to Na was 1.02 in Comparative Example 7, 1.22 in Comparative Example 8 and 1.33 in Comparative Example 9. The other production methods and the evaluation methods were the same as in Examples 27. The results obtained are shown in Table 3.

From the results of Examples 27 to 30 and Comparative Examples 7 to 9, there were obtained similar tendencies and results to those in the cases of Examples 1 to 17 where the Ba site was substituted by a rare earth element.

(Examples 31 to 35)

In Examples 31 to 35, each sintered body was obtained using the same composition and production method as in Example 27. However, they are examples where the molar ratio of the BT calcined powder to the BNT calcined powder was changed or the amount of Nb was changed. The other production methods and the evaluation methods of the semiconductor ceramic composition were the same as in Example 27. The results obtained are shown in Table 3.

(Comparative Example 10)

In Comparative Example 10, a sintered body was obtained using the same production method as in Example 31. However, it was made using an amount of Nb which was out of the range of the invention. The results obtained are shown in Table 3.

(Example 36)

In Example 36, a sintered body was obtained using the same composition and production method as in Example 27. However, it is an example where a portion of Ti was substituted by Sb. A sample was made and property evaluation was performed in the same manner as in Example 27 except that $Sb_2O_3$ was used instead of $Nb_2O_3$. The results obtained are shown in Table 3.

(Example 37)

In Example 37, a sintered body was obtained using the same composition and production method as in Example 27. However, it is an example where a portion of Ti was substituted by Ta. A sample was made and property evaluation was performed in the same manner as in Example 27 except that $Ta_2O_5$ was used instead of $Nb_2O_3$. The results obtained are shown in Table 3.

From the result of the above Examples 27 to 37, the target property values were satisfied in all of the room temperature resistivity $R_{25}$, the temperature coefficient of resistivity $\alpha$ and the change with time.

Table 3

| | x | y (z) | Weighed value | | Analytical value | | Molar ratio of BiNa (Bi/Na) Weighed value | Molar ratio of BiNa (Bi/Na) Analytical value | Curie temperature (°C) | Room temperature resistivity $R_{25}$ ($\Omega \cdot$ cm) | Temperature coefficient of resistivity $\alpha$ (%/°C) | Change with time (%) |
|---|---|---|---|---|---|---|---|---|---|---|---|---|
| | | | $\theta$ | $\delta$ | $\theta$ | $\delta$ | | | | | | |
| Example 27 | 0.088 | 0.003 | 0.54 | 0.51 | 0.52 | 0.50 | 1.06 | 1.04 | 164 | 43 | 8.4 | 9.2 |
| Example 28 | 0.088 | 0.003 | 0.55 | 0.51 | 0.53 | 0.50 | 1.18 | 1.06 | 157 | 34 | 8.0 | 7.8 |
| Example 29 | 0.088 | 0.003 | 0.58 | 0.51 | 0.56 | 0.50 | 1.14 | 1.12 | 162 | 27 | 7.4 | 5.9 |
| Example 30 | 0.088 | 0.003 | 0.62 | 0.51 | 0.60 | 0.50 | 1.21 | 1.20 | 168 | 23 | 7.0 | 4.7 |
| Comparative Example 7* | 0.088 | 0.003 | 0.53 | 0.51 | 0.51 | 0.50 | 1.04 | 1.02 | 158 | 61 | 10.0 | 34 |
| Comparative Example 8* | 0.088 | 0.003 | 0.64 | 0.51 | 0.61 | 0.50 | 1.25 | 1.22 | 171 | 15 | 6.6 | 5.0 |
| Comparative Example 9* | 0.088 | 0.003 | 0.69 | 0.51 | 0.67 | 0.50 | 1.36 | 1.33 | 201 | 29 | 2.2 | 0.9 |
| Example 31 | 0.088 | 0.0015 | 0.58 | 0.51 | 0.56 | 0.50 | 1.14 | 1.12 | 161 | 36 | 8.2 | 6.6 |
| Example 32 | 0.088 | 0.0048 | 0.58 | 0.51 | 0.56 | 0.50 | 1.14 | 1.12 | 167 | 21 | 7.1 | 4.9 |
| Comparative Example 10* | 0.088 | 0.0052 | 0.58 | 0.51 | 0.56 | 0.50 | 1.14 | 1.12 | 168 | 17 | 6.8 | 4.5 |
| Example 33 | 0.28 | 0.003 | 0.58 | 0.51 | 0.56 | 0.50 | 1.14 | 1.12 | 191 | 40 | 8.5 | 8.8 |
| Example 34 | 0.14 | 0.003 | 0.58 | 0.51 | 0.56 | 0.50 | 1.14 | 1.12 | 180 | 35 | 8.3 | 8.7 |
| Example 35 | 0.02 | 0.003 | 0.58 | 0.51 | 0.56 | 0.50 | 1.14 | 1.12 | 127 | 34 | 8.4 | 8.9 |
| Example 36 | 0.088 | 0.003 | 0.58 | 0.51 | 0.56 | 0.50 | 1.14 | 1.12 | 157 | 33 | 7.8 | 6.9 |
| Example 37 | 0.088 | 0.003 | 0.58 | 0.51 | 0.56 | 0.50 | 1.14 | 1.12 | 156 | 31 | 8.1 | 7.5 |

(Example 38)

In Example 38, a semiconductor ceramic composition was obtained as follows using the second method in the process of the remaining method. First, the BT calcined powder was made in the same manner as in Example 2. Raw material powders of $BaCO_3$, $TiO_2$ and $La_2O_3$ were prepared and then weighed and blended so as to be $(Ba_{0.994}La_{0.3.006})TiO_3$, followed by mixing in pure water. The resulting mixed raw material powder was calcined in the air at 900°C for 4 hours to prepare a BT calcined powder.

Then, raw material powders of $Na_2CO_3$, $Bi_2O_3$ and $TiO_2$ were prepared and then blended so as to be $Bi_{0.50}Na_{0.505}TiO_3$ (molar ratio Bi/Na of Bi to Na was 0.99), followed by mixing in ethanol. The resulting mixed raw material powder was calcined in the air at 800°C for 2 hours to prepare a BNT calcined powder.

When the BNT calcined powder was subjected to ICP analysis, the values of θ and δ were 0.49 and 0.505, respectively. The prepared BT calcined powder and BNT calcined powder were blended so that the molar ratio became 73/7 and $Bi_2O_3$ was further added and weighed so as to be $Bi_{0.51}Na_{0.505}TiO_3$ (molar ratio Bi/Na of Bi to Na was 1.13). Mixing and pulverization were performed by a pot mil using pure water as a medium until the central particle diameter of the mixed calcined powder became 1.0 $\mu$m to 2.0 $\mu$m, followed by drying. PVA was added in an amount of 10% by weight to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body was kept in a nitrogen atmosphere having an oxygen concentration of 0.01 vol% at 1360°C for 4 hours and then gradually cooled to obtain a sintered body.

The resulting sintered body was subjected to processing, electrode formation and property evaluation in the same manner as in Example 1. The results obtained are shown in Table 4. The molar ratio Bi/Na of Bi to Na was 1.13 as a weighed value but the value obtained by ICP analysis was 1.12, which was close to the weighed value. Thus, it is revealed that the molar ratio Bi/Na of Bi to Na can be controlled with high accuracy.

(Examples 39 to 41)

In Examples 39 to 41, each sintered body was obtained using the same composition and production method as in Example 38. However, they are examples where the molar ratio Bi/Na of Bi to Na was changed. The production methods and the evaluation methods of the semiconductor ceramic composition were the same as in Examples 38. The results obtained are shown in Table 4. The results of Examples 38 to 41 satisfied the target property values in all of the room temperature resistivity $R_{25}$, the temperature coefficient of resistivity α and the change with time.

(Example 42)

Example 42 is an example where a portion of Ti was substituted by Nb and a semiconductor ceramic composition was obtained using the second method in the process of the remaining method. Raw material powders of $BaCO_3$, $TiO_2$ and $Nb_2O_3$ were prepared and then blended so as to be $Ba(Ti_{0.997}Nb_{0.003})O_3$, followed by mixing in pure water. The resulting mixed raw material powder was calcined in the air at 900°C for 4 hours to prepare a BT calcined powder.

Then, raw material powders of $Na_2CO_3$, $Bi_2O_3$ and $TiO_2$ were prepared and then blended so as to be $Bi_{0.50}Na_{0.505}TiO_3$ (molar ratio Bi/Na of Bi to Na was 1.00), followed by mixing in ethanol. The resulting mixed raw material powder was calcined in the air at 800°C for 2 hours to prepare a BNT calcined powder.

When the BNT calcined powder was subjected to ICP analysis, the values of θ and δ were 0.49 and 0.505, respectively. The prepared BT calcined powder and BNT calcined powder were blended so that the molar ratio became 73/7 and $Bi_2O_3$ was further added so as to be $Bi_{0.52}Na_{0.505}TiO_3$ (molar ratio Bi/Na of Bi to Na was 1.03). Mixing and pulverization were performed by a pot mil using pure water as a medium until the central particle diameter of the mixed calcined powder became 1.0 $\mu$m to 2.0 $\mu$m, followed by drying. PVA was added in an amount of 10% by weight to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body was kept in a nitrogen atmosphere having an oxygen concentration of 0.01 vol% at 1360°C for 4 hours and then gradually cooled to obtain a sintered body. The resulting sintered body was subjected to electrode formation in the same manner as in Example 1 to obtain a semiconductor ceramic composition. The evaluation methods were the same as in Example 1. The results obtained are shown in Table 4.

(Examples 43 to 45)

In Examples 43 to 45, each sintered body was obtained using the same composition and production method as in Example 42. However, they are examples where the molar ratio Bi/Na of Bi to Na was changed. The production methods and the evaluation methods of the semiconductor ceramic composition were the same as in Example 42. The results obtained are shown in Table 4. The results of Examples 42 to 45 satisfied the target property values in all of the room temperature resistivity $R_{25}$, the temperature coefficient of resistivity $\alpha$ and the change with time.

(Examples 46 to 56)

In Examples 46 to 56, each sintered body was obtained using the same composition and production method as in Example 38. However, they are examples where the rare earth element R in $(Ba_{0.994}R_{0.006})TiO_3$ is changed. As the rare earth element, Pr was used in Example 46 and Nd, Sm, Eu, Gd, Tb, Dy, Ho, Tm, Yb or Lu was used in each of the subsequent Examples in ascending order. The other production methods and the evaluation methods of the semiconductor ceramic composition were the same as in Example 41. The results obtained are shown in Table 4. The results of Examples 46 to 56 also satisfied the target property values in all of the room temperature resistivity $R_{25}$, the temperature coefficient of resistivity $\alpha$ and the change with time.

Table 4

| | x | y (z) | Weighed value | | Analytical value | | Molar ratio of BiNa (Bi/Na) Weighed value | Molar ratio of BiNa (Bi/Na) Analytical value | Curie temperature (°C) | Room temperature resistivity $R_{25}$ ($\Omega \cdot$ cm) | Temperature coefficient of resistivity $\alpha$ (%/°C) | Change with time (%) |
|---|---|---|---|---|---|---|---|---|---|---|---|---|
| | | | θ | δ | θ | δ | | | | | | |
| Example 38 | 0.088 | 0.006 | 0.57 | 0.505 | 0.56 | 0.50 | 1.13 | 1.12 | 165 | 22 | 7.1 | 5.4 |
| Example 39 | 0.088 | 0.006 | 0.53 | 0.505 | 0.52 | 0.50 | 1.05 | 1.04 | 157 | 41 | 8.0 | 8.4 |
| Example 40 | 0.088 | 0.006 | 0.54 | 0.505 | 0.53 | 0.50 | 1.07 | 1.06 | 159 | 31 | 8.0 | 7.9 |
| Example 41 | 0.088 | 0.006 | 0.62 | 0.505 | 0.6 | 0.50 | 1.23 | 1.20 | 166 | 19 | 7.1 | 3.8 |
| Example 42 | 0.088 | 0.003 | 0.53 | 0.505 | 0.52 | 0.50 | 1.05 | 1.04 | 158 | 38 | 8.0 | 8.8 |
| Example 43 | 0.088 | 0.003 | 0.54 | 0.505 | 0.53 | 0.50 | 1.07 | 1.06 | 159 | 31 | 7.9 | 7.5 |
| Example 44 | 0.088 | 0.003 | 0.57 | 0.505 | 0.56 | 0.50 | 1.13 | 1.12 | 167 | 22 | 7.1 | 5.2 |
| Example 45 | 0.088 | 0.003 | 0.62 | 0.505 | 0.6 | 0.50 | 1.23 | 1.20 | 168 | 17 | 7.0 | 4.1 |
| Example 46 | 0.088 | 0.006 | 0.57 | 0.505 | 0.56 | 0.50 | 1.13 | 1.12 | 160 | 29 | 7.6 | 6.1 |
| Example 47 | 0.088 | 0.006 | 0.57 | 0.505 | 0.56 | 0.50 | 1.13 | 1.12 | 167 | 24 | 7.1 | 4.4 |
| Example 48 | 0.088 | 0.006 | 0.57 | 0.505 | 0.56 | 0.50 | 1.13 | 1.12 | 165 | 25 | 7.3 | 5.8 |
| Example 49 | 0.088 | 0.006 | 0.57 | 0.505 | 0.56 | 0.50 | 1.13 | 1.12 | 162 | 28 | 7.5 | 7.1 |
| Example 50 | 0.088 | 0.006 | 0.57 | 0.505 | 0.56 | 0.50 | 1.13 | 1.12 | 166 | 24 | 7.2 | 5.3 |
| Example 51 | 0.088 | 0.006 | 0.57 | 0.505 | 0.56 | 0.50 | 1.13 | 1.12 | 162 | 31 | 7.6 | 8.7 |
| Example 52 | 0.088 | 0.006 | 0.57 | 0.505 | 0.56 | 0.50 | 1.13 | 1.12 | 167 | 23 | 7.0 | 4.5 |
| Example 53 | 0.088 | 0.006 | 0.57 | 0.505 | 0.56 | 0.50 | 1.13 | 1.12 | 165 | 28 | 7.3 | 5.2 |
| Example 54 | 0.088 | 0.006 | 0.57 | 0.505 | 0.56 | 0.50 | 1.13 | 1.12 | 167 | 22 | 7.0 | 3.6 |
| Example 55 | 0.088 | 0.006 | 0.57 | 0.505 | 0.56 | 0.50 | 1.13 | 1.12 | 164 | 26 | 7.4 | 6.3 |
| Example 56 | 0.088 | 0.006 | 0.57 | 0.505 | 0.56 | 0.50 | 1.13 | 1.12 | 163 | 27 | 7.4 | 5.9 |

(Examples 57 to 58)

In Examples 57 to 58, each sintered body was obtained using the same composition and production method as in Example 2. However, they are examples where $\theta$, $\delta$, and the molar ratio of Bi to Na are changed. The production methods and the evaluation methods of the semiconductor ceramic composition were the same as in Example 2. The results obtained are shown in Table 5. The results of Examples 57 to 58 satisfied the target property values in all of the room temperature resistivity $R_{25}$, the temperature coefficient of resistivity $\alpha$ and the change with time.

(Comparative Examples 11 to 14)

In Comparative Examples 11 to 14, each sintered body was obtained using the same composition and production method as in Example 2. However, they are examples where 8 and/or $\delta$ are out of the range of the invention. The production methods and the evaluation methods of the semiconductor ceramic composition were the same as in Example 2. The results obtained are shown in Table 5. From the results of Comparative Examples 11 to 14 and Examples 57 and 58, when $\theta$ and/or $\delta$ are out of the range of $0.46 < \theta < 0.62$ and $0.45 \leq \delta \leq 0.60$, it is revealed that the target property values are not satisfied in terms of the room temperature resistivity $R_{25}$, the temperature coefficient of resistivity $\alpha$ and the change with time even when the molar ratio Bi/Na of Bi to Na is within the range of the invention. Moreover, the same shall apply when the weighed values of $\theta$ and/or $\delta$ are out of the range of $0.48 < 8 \leq 0.65$ and $0.45 \leq 8 \leq 0.62$.

(Examples 59 to 60)

In Examples 59 to 60, each sintered body was obtained using the same composition and production method as in Example 27. However, they are examples where $\theta$, $\delta$, and the molar ratio of Bi to Na were changed. The production methods and the evaluation methods of the semiconductor ceramic composition were the same as in Example 2. The results obtained are shown in Table 5. The results of Examples 59 to 60 satisfied the target property values in all of the room temperature resistivity $R_{25}$, the temperature coefficient of resistivity $\alpha$ and the change with time.

(Comparative Examples 15 to 18)

In Comparative Examples 15 to 18, each sintered body was obtained using the same composition and production method as in Example 27. However, they are examples where $\theta$ and/or $\delta$ were out of the range of the invention. The production methods and the evaluation methods of the semiconductor ceramic composition were the same as in Example 27. The results obtained are shown in Table 5. From the results of Comparative Examples 15 to 18 and Examples 59 and 60, when $\theta$ and/or $\delta$ are out of the range of $0.46 < \theta \leq 0.62$ and $0.45 \leq \delta \leq 0.60$, it is revealed that the target property values are not satisfied in terms of the room temperature resistivity $R_{25}$, the temperature coefficient of resistivity $\alpha$ and the change with time even when the molar ratio Bi/Na of Bi to Na is within the range of the invention. Moreover, the same shall apply when the weighed values of $\theta$ and/or $\delta$ are out of the range of $0.48 < \theta \leq 0.65$ and $0.45 \leq \delta \leq 0.62$.
Table 5

| | x | y (z) | Weighed value | | Analytical value | | Molar ratio of BiNa (Bi/Na) Weighed value | Molar ratio of BiNa (Bi/Na) Analytical value | Curie temperature (°C) | Room temperature $R_{25}$ ($\Omega \cdot$cm) | Temperature coefficient of resistivity $\alpha$ (%/°C) | Change with time (%) |
|---|---|---|---|---|---|---|---|---|---|---|---|---|
| | | | $\theta$ | $\delta$ | $\theta$ | $\delta$ | | | | | | |
| Example 57 | 0.088 | 0.006 | 0.49 | 0.46 | 0.47 | 0.45 | 1.07 | 1.04 | 161 | 47 | 7.7 | 9.5 |
| Example 58 | 0.088 | 0.006 | 0.65 | 0.62 | 0.62 | 0.60 | 1.05 | 1.03 | 162 | 49 | 7.8 | 9.9 |
| Comparative Example 11 | 0.088 | 0.006 | 0.47 | 0.44 | 0.45 | 0.43 | 1.07 | 1.05 | 160 | 56 | 7.9 | 10.3 |
| Comparative Example 12 | 0.088 | 0.006 | 0.44 | 0.41 | 0.42 | 0.40 | 1.07 | 1.05 | 163 | 233 | 7.5 | 76.1 |
| Comparative Example 13 | 0.088 | 0.006 | 0.67 | 0.63 | 0.64 | 0.61 | 1.06 | 1.05 | 161 | 67 | 7.2 | 21.5 |
| Comparative Example 14 | 0.088 | 0.006 | 0.70 | 0.66 | 0.66 | 0.64 | 1.06 | 1.03 | 169 | 310 | 6.7 | 207 |
| Example 59 | 0.088 | 0.003 | 0.49 | 0.46 | 0.47 | 0.45 | 1.07 | 1.04 | 158 | 50 | 8.1 | 9.2 |
| Example 60 | 0.088 | 0.003 | 0.65 | 0.62 | 0.62 | 0.60 | 1.05 | 1.03 | 156 | 49 | 8.3 | 9.6 |
| Comparative Example 15 | 0.088 | 0.003 | 0.47 | 0.44 | 0.45 | 0.43 | 1.07 | 1.05 | 155 | 61 | 8.6 | 19.4 |
| Comparative Example 16 | 0.088 | 0.003 | 0.44 | 0.41 | 0.42 | 0.40 | 1.07 | 1.05 | 160 | 255 | 7.8 | 198 |
| Comparative Example 17 | 0.088 | 0.003 | 0.67 | 0.63 | 0.64 | 0.61 | 1.06 | 1.05 | 159 | 79 | 7.9 | 32.6 |
| Comparative Example 18 | 0.088 | 0.003 | 0.70 | 0.66 | 0.66 | 0.64 | 1.06 | 1.03 | 174 | 378 | 5.7 | 340 |

(Heat Generating Module)

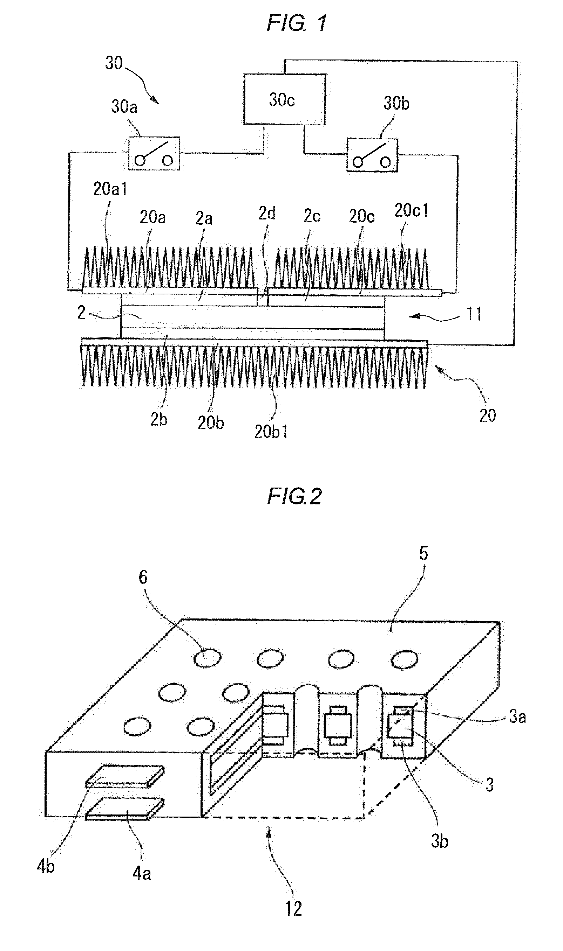

A PTC element of the invention was sandwiched and fixed between heat radiating fins 20a1, 20b1 and 20c1 as shown in FIG. 1 to obtain a heat generating module 20. The PTC element 11 is composed of a PTC material 1a, electrodes 2a and 2c formed on a face of a positive side material are thermally and electrically closely attached to power supplying electrodes 20a and 20c at positive side, respectively, and the electrode 2b formed on another face is thermally and electrically closely attached to a power supplying electrode 20b at negative side. Moreover, the power supplying electrodes 20a, 20b and 20c are thermally connected to the heat radiating fins 20a1, 20b1 and 20c1. Incidentally, an insulating layer 2d is provided between the power supplying electrode 20a and the power supplying electrode 20c to insulate both from each other electrically. Heat generated at the heat generator 11 is transmitted to the electrodes 2a, 2b and 2c, the power supplying electrodes 20a, 20b and 20c, and heat radiating fins 20a1, 20b1 and 20c1 in the order and is mainly radiated from the heat radiating fins 20a1, 20b1 and 20c1 into the atmosphere.

When a power source 30c is connected between the power supplying electrode 20a and the power supplying electrode 20b or between the power supplying electrode 20c and the power supplying electrode 20b, power consumption becomes small but when the source is connected between both of the power supplying electrodes 20a and 20c and the power supplying electrode 20b, the power consumption becomes large. That is, it is possible to change the power consumption in two stages. Thus, the heat generating module 20 can switch heating capacity depending on load situation of the pour source 30c and the desired degree of requirement for rapid or slow heating.

By connecting the heat generating module 20 capable of switching the heating capacity to the power source 30c, a heating apparatus 30 can be configured. Incidentally, the power source 30c is a direct-current power source. The power supplying electrode 20a and the power supplying electrode 20c of the heat generating module 20 are connected in parallel to one of the electrodes of the power source 30c through separate switches 30a and 30b and the power supplying electrode 20b is connected as a common terminal to the other electrode of the power source 30c.

When either of the switch 30a or 30b is only put on, the heating capacity is small and the load on the power source 30c can be lightened. When both are put on, the heating capacity can be enlarged.

According to the heating apparatus 30, the PTC element 11 can be maintained at a constant temperature without equipping the power source 30c with a particular mechanism. That is, when a PTC material having a jump characteristic is heated to around the Curie temperature, the resistance value of the PTC material 1a sharply increases and the flow of the current through the PTC element 11 decreases, so that the material is no more heated automatically. Moreover, when the temperature of the PTC element 11 lowers from the Curie temperature, the current is again allowed to flow through the element and the PTC element 11 is heated. Since the temperature of the PTC element 11 and also the whole heat generating module 20 can be made constant through repetition of such a cycle, a circuit for regulating the phase and width of the power source 30c and also a temperature detecting mechanism or a mechanism for comparison with a target temperature, a circuit for regulating power for heating, and the like are also unnecessary.

The heating apparatus 30 can heat air with introducing air between the heat radiating fins 20a1 to 20c1 or can heat a liquid such as water with connecting a metal tube for liquid flow between the heat radiating fins 20a1 to 20c1. On this occasion, since the PTC element 11 is also kept at a constant temperature, a safe heating apparatus 30 can be configured.

Furthermore, a heat generating module 12 according to a modified example of the invention will be explained with reference to FIG. 2. Incidentally, the heat generating module 12 is shown with cutting a part thereof for the purpose of illustration.

The heat generating module 12 is an approximately flat rectangular module and has a PTC element 3 obtained by processing a semiconductor ceramic composition of the invention into an approximately rectangular shape, electrodes 3a and 3b provided on upper and lower faces of the element 3, an insulating coating layer 5 covering the PTC element 3 and the electrodes 3a and 3b, and outgoing electrodes 4a and 4b connected to the electrodes 3a and 3b, respectively, and exposed from the insulating coating layer 5 toward outside. In the heat generating module 12, plural through-holes 6 which penetrate the upper and lower faces of the heat generating module 12 and whose inner peripheral faces are covered with the insulating coating layer 5.

The heat generating module 12 can be made as follows, for example. First, in the PTC element 3, plural holes penetrating the PTC element 3 in a thickness direction are formed. Next, the electrodes 3a and 3b are formed on both faces of the PTC element 3 excluding opening peripheries at which the holes open on the upper and lower faces of the PTC element 3. In this regard, the electrodes 3a and 3b are formed by printing with overlaying an ohmic electrode and a surface electrode as mentioned above. Further, after the outgoing electrode 4a and 4b are provided, the whole of the PTC element 3 and the electrodes 3 a and 3b is covered with an insulating coating agent so that the outgoing electrodes 4a and 4b are exposed toward outside to form the insulating coating layer 5, thereby the heat generating module 12 being obtained. At the formation of the insulating coating layer 5, the inner peripheral faces of the holes of the PTC element 3 are covered with the insulating coating layer 5 to form the through-holes 6.

The heat generating module 12 can heat a fluid by introducing the fluid into the through-holes 6. On this occasion, since the PTC element 3 and the electrodes 3a and 4a through which an electric current is allowed to flow are covered with the insulating coating layer 5, they do not come into direct contact with the fluid, so that a conductive liquid can be heated. Therefore, the heat generating module 12 is suitable for uses in which fluids such as a salt solution having electric conductivity are instantaneously heated.

The present application is based on Japanese Patent Application No. 2009-232714 filed on October 6, 2009, and the contents are incorporated herein by reference.

INDUSTRIAL APPLICABILITY

The semiconductor ceramic composition obtained by the present invention is most suitable for PTC elements such as a PTC thermistor, a PTC heater, a PTC switch, and a thermometer. Also, the composition can be utilized for heat generating modules using the PTC element as a constituting element.

**Claims**

1. A semiconductor ceramic composition which is represented by a composition formula of $[(Bi_\theta-Na_\delta)_x(Ba_{1-y}R_y)_{1-x}]$ $TiO_3$ (wherein R is at least one kind of rare earth elements), wherein x, y, $\theta$ and $\delta$ satisfy $0<x\leq0.3$, $0<y\leq0.02$, $0.46<\theta\leq0.62$ and $0.45\leq\delta\leq0.60$ and a molar ratio Bi/Na of Bi to Na in a sintered body is more than 1.02 but 1.20 or less.

2. A semiconductor ceramic composition which is represented by a composition formula of $[(Bi_\theta-Na_\delta)_xBa_{1-x}][Ti_{1-z}M_z]$ $O_3$ (wherein M is at least one kind of Nb, Ta and Sb), wherein x, z, $\theta$ and $\delta$ satisfy $0<x\leq0.3$, $0<z\leq0.0050$, $0.46<\theta\leq0.62$ and $0.45\leq\delta\leq0.60$ and a molar ratio Bi/Na of Bi to Na in a sintered body is more than 1.02 but 1.20 or less.

3. The semiconductor ceramic composition according to claim 1 or 2, wherein a change with time is 10% or less at the time when an electrification is performed at 13 V for 5000 hours per a thickness of 1 mm in an electrification direction of the semiconductor ceramic composition.

4. A method for producing a semiconductor ceramic composition comprising:

   a step of preparing a $(BaR)TiO_3$ calcined powder (wherein R is at least one kind of rare earth elements) and a $(Bi_\theta-Na_\delta)TiO_3$ calcined powder separately,
   a step of obtaining a formed body composed of a mixed calcined powder obtained by mixing the $(BaR)TiO_3$ calcined powder and the $(Bi_\theta-Na_\delta)TiO_3$ calcined powder, and
   a step of sintering the formed body in a non-oxidative atmosphere having an oxygen concentration of 1 vol% or less to make a sintered body,
   wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, in the step of preparing the $(Bi_\theta-Na_\delta)TiO_3$ calcined powder, weighing is performed such a manner that weighed values of $\theta$ and $\delta$ satisfy $0.49<\theta\leq0.66$ and $0.46<\delta\leq0.62$ and the molar ratio Bi/Na of Bi to Na is 1.05 to 1.24 so that an amount of Bi in a Bi raw material powder becomes larger than an amount of Na in an Na raw material powder.

5. A method for producing a semiconductor ceramic composition comprising:

   a step of preparing a $(BaM)TiO_3$ calcined powder (wherein M is at least one kind of Nb, Ta and Sb) and a $(Bi_\theta-Na_\delta)TiO_3$ calcined powder separately,
   a step of obtaining a formed body composed of a mixed calcined powder obtained by mixing the $(BaM)TiO_3$ calcined powder and the $(Bi_\theta-Na_\delta)TiO_3$ calcined powder, and
   a step of sintering the formed body in a non-oxidative atmosphere having an oxygen concentration of 1 vol% or less to make a sintered body,
   wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, in the step of preparing the $(Bi_\theta-Na_\delta)TiO_3$ calcined powder, weighing is performed such a manner that weighed values of $\theta$ and $\delta$ satisfy $0.49<\theta\leq0.66$ and $0.46<\delta\leq0.62$ and the molar ratio Bi/Na of Bi to Na is 1.05 to 1.24 so that an amount of Bi in a Bi raw material powder becomes larger than an amount of Na in an Na raw material powder.

6. The method for producing a semiconductor ceramic composition according to claim 4 or 5, wherein, at the preparation of the mixed calcined powder, a Bi raw material powder is added to perform adjustment so that the weighed values of $\theta$ and $\delta$ satisfy $0.49<\theta\leq0.66$ and $0.46<\delta\leq0.62$.

7. A method for producing a semiconductor ceramic composition comprising:

a step of preparing a $(BaR)TiO_3$ calcined powder (wherein R is at least one kind of rare earth elements) and a $(Bi_\theta-Na_\delta)TiO_3$ calcined powder separately,

a step of obtaining a formed body composed of a mixed calcined powder obtained by mixing the $(BaR)TiO_3$ calcined powder and the $(Bi_\theta-Na_\delta)TiO_3$ calcined powder, and

a step of sintering the formed body in a non-oxidative atmosphere having an oxygen concentration of 1 vol% or less to make a sintered body,

wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, a Bi raw material powder is added at the preparation of the mixed calcined powder to perform adjustment so that weighed values of $\theta$ and $\delta$ satisfy $0.48<\theta\leq0.65$ and $0.45\leq\delta\leq0.62$ and a molar ratio Bi/Na of Bi to Na is 1.04 to 1.23.

8. A method for producing a semiconductor ceramic composition comprising:

a step of preparing a $(BaM)TiO_3$ calcined powder (wherein M is at least one kind of Nb, Ta and Sb) and a $(Bi_\theta-Na_\delta)TiO_3$ calcined powder separately,

a step of obtaining a formed body composed of a mixed calcined powder obtained by mixing the $(BaM)TiO_3$ calcined powder and the $(Bi_\theta-Na_\delta)TiO_3$ calcined powder, and

a step of sintering the formed body in a non-oxidative atmosphere having an oxygen concentration of 1 vol% or less to form a sintered body,

wherein, in order that $\theta$ and $\delta$ in the sintered body satisfy $0.46<\theta\leq0.62$ and $0.45\leq\delta\leq0.60$ and a molar ratio Bi/Na of Bi to Na becomes more than 1.02 but 1.20 or less, a Bi raw material powder is added at the preparation of the mixed calcined powder to perform adjustment so that weighed values of $\theta$ and $\delta$ satisfy $0.48<\theta\leq0.65$ and $0.45\leq\delta\leq0.62$ and the molar ratio Bi/Na of Bi to Na is 1.04 to 1.23.

9. A PTC element comprising the semiconductor ceramic composition according to any one of claims 1 to 3 and provided thereon an ohmic electrode for passing an electric current though the semiconductor ceramic composition.

10. A heat generating module comprising the PTC element according to claim 9 and a power supplying electrode provided on the PTC element.

## FIG. 1

## FIG.2

**INTERNATIONAL SEARCH REPORT**

<table>
<tr><td>International application No.</td></tr>
<tr><td>PCT/JP2010/067465</td></tr>
</table>

A.　CLASSIFICATION OF SUBJECT MATTER
*C04B35/46*(2006.01)i, *H01C7/02*(2006.01)i

According to International Patent Classification (IPC) or to both national classification and IPC

B.　FIELDS SEARCHED

Minimum documentation searched (classification system followed by classification symbols)
C04B35/46, H01C7/02

Documentation searched other than minimum documentation to the extent that such documents are included in the fields searched
　　Jitsuyo Shinan Koho　　　　　1922-1996　　Jitsuyo Shinan Toroku Koho　　1996-2010
　　Kokai Jitsuyo Shinan Koho　　1971-2010　　Toroku Jitsuyo Shinan Koho　　1994-2010

Electronic data base consulted during the international search (name of data base and, where practicable, search terms used)
　　REGISTRY(STN), CAplus(STN)

C.　DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2007/097462 A1　(Neomax Co., Ltd.),<br>30 August 2007 (30.08.2007),<br>claims; paragraphs [0001], [0057]; table 4 | 1,2<br>3,7-10<br>4-6 |
| Y<br>A | WO 2009/119335 A1　(Hitachi Metals, Ltd.),<br>01 October 2009 (01.10.2009),<br>claims; paragraphs [0036], [0052] to [0055] | 3,7-10<br>1,2,4-6 |
| A | WO 2006/118274 A1　(Neomax Co., Ltd.),<br>09 November 2006 (09.11.2006),<br>paragraphs [0053] to [0056]; table 2 | 1-10 |
| A | WO 2008/038538 A1　(Murata Mfg. Co., Ltd.),<br>03 April 2008 (03.04.2008),<br>claims; paragraphs [0029] to [0032]; table 1 | 1-10 |

☐　Further documents are listed in the continuation of Box C.　　☒　See patent family annex.

\*　　Special categories of cited documents:
"A"　document defining the general state of the art which is not considered to be of particular relevance
"E"　earlier application or patent but published on or after the international filing date
"L"　document which may throw doubts on priority claim(s) or which is cited to establish the publication date of another citation or other special reason (as specified)
"O"　document referring to an oral disclosure, use, exhibition or other means
"P"　document published prior to the international filing date but later than the priority date claimed

"T"　later document published after the international filing date or priority date and not in conflict with the application but cited to understand the principle or theory underlying the invention
"X"　document of particular relevance; the claimed invention cannot be considered novel or cannot be considered to involve an inventive step when the document is taken alone
"Y"　document of particular relevance; the claimed invention cannot be considered to involve an inventive step when the document is combined with one or more other such documents, such combination being obvious to a person skilled in the art
"&"　document member of the same patent family

Date of the actual completion of the international search
　　21 December, 2010 (21.12.10)

Date of mailing of the international search report
　　11 January, 2011 (11.01.11)

Name and mailing address of the ISA/
　　Japanese Patent Office

Authorized officer

Facsimile No.

Telephone No.

Form PCT/ISA/210 (second sheet) (July 2009)

**INTERNATIONAL SEARCH REPORT**
Information on patent family members

| International application No. |
| --- |
| PCT/JP2010/067465 |

| | | |
| --- | --- | --- |
| WO 2007/097462 A1 | 2007.08.30 | US 2009/0036293 A1<br>EP 2014626 A1<br>CN 101389581 A<br>KR 2009-0007283 A |
| WO 2009/119335 A1 | 2009.10.01 | JP 2009-234849 A |
| WO 2006/118274 A1 | 2006.11.09 | US 2008/0170977 A1<br>US 2010/0075825 A<br>US 7704906 B<br>EP 1876157 A1<br>KR 2008-0012855 A<br>CN 101213155 A |
| WO 2008/038538 A1 | 2008.04.03 | US 2009/0201121 A1<br>EP 2067755 A1<br>KR 2009-0045394 A<br>CN 101516802 A |

Form PCT/ISA/210 (patent family annex) (July 2009)

<table>
<tr><td colspan="2">**INTERNATIONAL SEARCH REPORT**</td><td>International application No.<br><br>PCT/JP2010/067465</td></tr>
</table>

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III** | **Observations where unity of invention is lacking (Continuation of item 3 of first sheet)** |
|---|---|

This International Searching Authority found multiple inventions in this international application, as follows:
```
    The invention in claim 1 has no novelty and no special technical feature
 since the invention is described in the following document 1, and consequently,
 the invention in claim 1 does not comply with the requirement of unity.
    The invention in claims as indicated below is relevant to main invention.

    Claims 1, 3, 9, 10
    Document 1: WO 2007/097462 A1
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

| **Remark on Protest** | ☐ The additional search fees were accompanied by the applicant's protest and, where applicable, the payment of a protest fee. |
|---|---|
| | ☐ The additional search fees were accompanied by the applicant's protest but the applicable protest fee was not paid within the time limit specified in the invitation. |
| | ☐ No protest accompanied the payment of additional search fees. |

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56169301 A
- WO 2006118274 A1

- JP 2009232714 A